(19) Europäisches Patentamt
European Patent Office
Office européen des brevets

(11) **EP 3 142 909 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(51) Int Cl.:
***B60T 17/22*** *(2006.01)*    ***G01D 1/00*** *(2006.01)*
***G01D 21/00*** *(2006.01)*

(21) Anmeldenummer: **15745195.6**

(22) Anmeldetag: **31.07.2015**

(86) Internationale Anmeldenummer:
**PCT/EP2015/067655**

(87) Internationale Veröffentlichungsnummer:
**WO 2016/020281 (11.02.2016 Gazette 2016/06)**

(54) **BEANSPRUCHUNGSKONTROLLE WÄHREND DES BETRIEBS EINES BAUTEILS**

STRESS MONITORING DURING THE OPERATION OF A COMPONENT

CONTRÔLE DE CONTRAINTE PENDANT LE FONCTIONNEMENT D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.08.2014 DE 102014215575**

(43) Veröffentlichungstag der Anmeldung:
**22.03.2017 Patentblatt 2017/12**

(73) Patentinhaber: **Siemens Aktiengesellschaft 80333 München (DE)**

(72) Erfinder:
• **ALEXEJENKO, Alexander**
 **96135 Stegaurach (DE)**
• **ROGGE, Steffen**
 **91090 Effeltrich (DE)**
• **WERMKE, Kai Markko**
 **90431 Nürnberg (DE)**

(56) Entgegenhaltungen:
**DE-A1-102013 201 494**    **US-A1- 2003 056 995**
**US-A1- 2014 174 316**

## Beschreibung

Die Erfindung betrifft ein Verfahren zum Ermitteln einer Betriebsbeanspruchung eines Bauteils während des Betriebs des Bauteils und ein Schienenfahrzeug zum Ausführen des Verfahrens.

Für viele Bauteile, insbesondere für Bauteile eines Fahrzeugs, ist eine direkte Erfassung einer Betriebsbeanspruchung nicht möglich. Eine indirekte Abschätzung der Betriebsbeanspruchung ist zudem durch komplizierte, oft nichtlineare Einflussfaktoren erschwert. Für solche Bauteile werden die Betriebsbeanspruchungen bei turnusgemäßen Inspektionen erfasst.

So findet beispielsweise die Erfassung der Betriebsbeanspruchung von Bremsscheiben und Bremsklötzen oder -Belägen eines Schienenfahrzeugs während Wartungsarbeiten in einem vorgeschriebenen, regelmäßigen Wartungsintervall statt. Weitere Erfassungen können nach einem besonderen Ereignis wie beispielsweise einer Notbremsung aus einer großen Geschwindigkeit durchgeführt werden, da eine Sichtkontrolle zur Überprüfung von Rissen oder Verformungen der Bremse notwendig geworden sein könnte. Andererseits könnte bei einer wenig beanspruchten Bremse auf eine regelmäße Inspektion der Bremse verzichtet werden oder das Wartungsintervall entsprechend angepasst werden.

Druckschrift US 2003/0056995 A1 offenbart ein Verfahren zum Ermitteln einer Betriebsbeanspruchung eines Bauteils während des Betriebs des Bauteils gemäß dem Oberbegriff des unabhängigen Patentanspruchs 1.

Der Erfindung liegt die Aufgabe zugrunde, ein Verfahren vorzuschlagen, um Betriebsbeanspruchungen eines Bauteils während des Betriebs des Bauteils zu erfassen.

Gelöst wird die Aufgabe durch die Gegenstände der unabhängigen Patentansprüche. Weiterbildungen und Ausgestaltungen der Erfindung finden sich in den Merkmalen der abhängigen Patentansprüche wieder.

Ein erfindungsgemäßes Verfahren zum Ermitteln einer Betriebsbeanspruchung eines Bauteils, insbesondere eines Bauteils eines Fahrzeugs, während des Betriebs des Bauteils umfasst folgende Verfahrensschritte:

a. Erfassen von Messwerten zu vorgegebenen Messgrößen während des Betriebs des Bauteils für wenigstens n unterschiedliche vorgegebene Betriebsmodi, wobei gilt: $n \geq 2$, wobei die vorgegebenen Messgrößen ungleich der zu ermittelnden Betriebsbeanspruchung des Bauteils sind;

b. Ermitteln von m Wirkungsoperanden $W_1$ bis $W_m$ in vorgegebener Abhängigkeit von den Messwerten für jeden der n vorgegebenen Betriebsmodi, wobei gilt: $2 \leq m \leq n$;

c. Erfassen jeweils eines Messwerts der Betriebsbeanspruchung nach dem Betrieb des Bauteils für jeden der n vorgegebenen Betriebsmodi, wobei gilt: $n \geq 2$;

d. Aufstellen und Lösen eines Gleichungssystems mit n Gleichungen derart, dass m Gewichtungsfaktoren $a_1$ bis $a_m$ erhalten werden, mit welchen die n Wirkungsoperanden $W_1$ bis $W_m$ gewichtet werden, wobei eine Summe aus den gewichteten Wirkungsoperanden für jeden der n Betriebsmodi gleich ist dem für den entsprechenden Betriebsmodus erfassten Messwert der Betriebsbeanspruchung, wobei gilt: $n \geq m \geq 2$;

e. Bereitstellen einer Berechnungsvorschrift zum Ermitteln der Betriebsbeanspruchung während des Betriebs des Bauteils mit den erhaltenen Gewichtungsfaktoren;

m und n sind natürliche Zahlen.

Verfahrensschritt a wird insbesondere während einer Justierphase ausgeführt, während hingegen die Berechnungsvorschrift gemäß Verfahrensschritt e zur Ermittlung der Betriebsbeanspruchung des Bauteils während des Betriebs des Bauteils während einer Betriebsphase bereitgestellt wird. Das bedeutet, dass die Messwerte zu den vorgegebenen Messgrößen während des Betriebs des Bauteils während einer Justierphase für die wenigstens n unterschiedlichen Betriebsmodi erfasst werden. Die Berechnungsvorschrift wird bereitgestellt, um während einer nachfolgenden Betriebsphase die Betriebsbeanspruchung zu ermitteln, ohne sie direkt und unmittelbar, insbesondere durch Messung, zu erfassen.

Das Bauteil ist insbesondere ein Bauteil eines Fahrzeugs, insbesondere eines Schienenfahrzeugs. Fahrzeuge dienen dem Transport von Personen und/oder Gütern. Neben Landfahrzeugen gelten auch Wasserfahrzeuge, Luft- und Raumfahrzeuge, sowie deren Mischformen umfasst.

Die Betriebsbeanspruchung des Bauteils umfasst einen Verschleiß des Bauteils. Wird als Betriebsbeanspruchung ein Verschleiß ermittelt, könnte das Bauteil auch als Verschleißteil bezeichnet werden. Als Verschleiß wird ein fortschreitender Masseverlust eines Körpers, insbesondere an seiner Oberfläche, bezeichnet, welcher meist durch mechanische Ursachen hervorgerufen wird. Verschleiß wird gelegentlich auch Abnutzung genannt. Verschleiß ist einer der Hauptgründe für Bauteilschädigungen und den damit verbundenen Ausfall von Maschinen und Geräten. Verschleißteile sind austauschbare Bauteile, die bei bestimmungsgemäßem Gebrauch einem gewissen Verschleiß unterliegen.

Die Betriebsbeanspruchung eines Bauteils ist grundsätzlich messbar. Oft jedoch nicht während des Betriebs des Bauteils. Daher ist die Betriebsbeanspruchung durch eine Messgröße anzugeben.

In Verfahrensschritt a werden Messwerte zu Messgrößen erfasst, die unmittelbaren oder mittelbaren Einfluss auf die Betriebsbeanspruchungen haben. Die Messgrößen dienen zur Abbildung von Einfluss- oder Abnutzungsfaktoren. Diese Einflussfaktoren beeinflussen die Betriebsbeanspruchung unmittelbar oder mittelbar, sind jedoch ungleich der Betriebsbeanspruchung. Zur Ermittlung, insbesondere zur mittelbaren Abschätzung, der Betriebsbeanspruchung mittels der Messwerte zu den Einflussgrößen, welche durch die Messgrößen angegeben werden, sind jedoch gegebenenfalls diverse mathematische Operationen notwendig.

Zunächst werden einzelne Wirkungsoperanden zur Charakterisierung der Betriebsbeanspruchung vorgegeben. Wirkungsoperanden müssen nicht unmittelbar Gegenstand einer Messung sein - sie sind nicht zwingend Messgröße. Sie können auch über physikalisch bekannte oder festgelegte mathematische Beziehungen aus Messgrößen bestimmt werden, denen unmittelbare Messungen gelten. Ein Wirkungsoperand bestimmt sich nach vorgegebener Berechnungsvorschrift aus mindestens einem Einflussfaktor. Die Wirkungsoperanden sind somit abhängig von den genannten Messwerten und bestimmen sich über eine vorgegebene Berechnungsvorschrift oder mathematische Formel.

Die Wirkungsoperanden werden also mittels vorgegebenen Funktionen und gemäß einer Weiterbildung der Erfindung mittels vorgegebener mathematischer Operationen ermittelt, wobei als Operanden der mathematischen Operationen die in Verfahrensschritt a erfasste Messwerte zu den vorgegebenen Messgrößen dienen. Weitere Operanden können gegebenenfalls Konstante Werte annehmen, welche, insbesondere in Abhängigkeit des entsprechenden Betriebsmodus, vorgegeben werden. Weitergebildet dienen ausschließlich Konstanten und die in Verfahrensschritt a erfassten Messwerte als Operanden zum ermitteln der Wirkungsoperanden.

Handelt es sich bei dem Bauteil beispielsweise um eine Bremsscheibe, um einen Bremsklotz oder um einen Bremsbelag einer Bremse, insbesondere einer hydraulischen oder druckluftbetriebenen Bremse, eines Schienenfahrzeugs, so werden beispielsweise die Bremszeit und/oder der Bremsweg und/oder der Bremsdruck in einem Bremszylinder der Bremse des Schienenfahrzeugs und/oder die momentane Geschwindigkeit des Schienenfahrzeugs kontinuierlich oder diskret mit einer vorgegebenen Messfrequenz gemessen und somit Messwerte zu diesen Messgrößen mittels entsprechend geeigneten Messaufnehmern erfasst. Ein erster Wirkungsoperand kann dann beispielsweise dadurch ermittelt werden, dass ein Integral über den Bremsweg von dem Quadrat der Messwerte des Bremsdrucks gebildet wird. Für einen zweiten Wirkungsoperanden kann ein Produkt aus dem Bremsdruck und der Momentangeschwindigkeit des Schienenfahrzeugs über den Bremsweg integriert werden. Ein dritter Wirkungsoperand könnte sich aus der Integration des Bremsdrucks über den Bremsweg ergeben. Bei m = 3 Wirkungsoperanden müssen wenigstens n = 3 voneinander verschiedene Betriebsmodi vorgegeben sein, für welche die Messwerte zu den vorgegebenen Messgrößen erfasst und für welche die Betriebsbeanspruchungen erfasst werden. Ein erster Betriebsmodus umfasst dann beispielsweise normale Bremsungen aus vorgegebenen Geschwindigkeiten bei Zufahrt zu einer Haltestelle. Ein zweiter Betriebsmodus kann hingegen Not- oder Schnellbremsungen aus hohen Geschwindigkeiten umfassen. Ein dritter Betriebsmodus umfasst dann beispielsweise Not- oder Schnellbremsungen aus niedrigen Geschwindigkeiten, wie sie beispielsweise auftreten können, wenn Personen kurz vor dem Halt des Schienenfahrzeugs auf die Gleise in Haltestellen gelangen.

Betriebsmodi können sich aber auch nur marginal unterscheiden. So könnten Messwerte eines ersten Betriebsmodus über einen vorgegebenen Zeitraum oder eine vorgegebene Wegstrecke ermittelt werden, beispielsweise von einem Ort B zu einem anderen C, im bestimmungsgemäßen Betriebs des Bauteils mit mehreren mäßigen Abbremsungen und einigen wenigen Schnellbremsungen. Der umgekehrte Weg von Ort C zu Ort B im bestimmungsgemäßen Betrieb des Bauteils könnte als zweiter Betriebsmodus dienen, selbst bei sehr ähnlichen Betriebsbedingungen. Wichtig ist, dass das Bauteil in voneinander getrennten und unterschiedlichen Betriebsmodi betrieben und die Messwerte erfasst und anschließend ausgewertet werden. Die Betriebsmodi können sich auch lediglich durch unterschiedliche Umweltbedingungen voneinander unterscheiden, solange die Umweltbedingungen auch in Messwerten erfasst und zur Ermittlung der Wirkungsoperanden herangezogen werden. So könnte beispielsweise der Einfluss von klimatischen Bedingungen berücksichtigt werden. Als Messwerte werden dann z.B. Temperatur oder Luftfeuchtigkeit erfasst. Die Ermittlung der Wirkungsoperanden erfolgt wie oben in vorgegebener, insbesondere fester, Abhängigkeit von den über die vorgegebene Zeit, beispielsweise über die verstrichene Zeitdauer des bestimmungsgemäßen Betriebs des Bauteils im entsprechenden Betriebsmodus, erfassten Messwerten. Gemäß einem Ausgestaltungsbeispiel erfolgt die Ermittlung der Wirkungsoperanden ausschließlich mittels der erfassten Messwerte und Konstanten und mathematischen Operationen.

Zum Aufstellen des Gleichungssystems aus Verfahrensschritt d werden anschließend die Wirkungsoperanden mit Gewichtungsfaktoren gewichtet, wobei jeder Wirkungsoperand mit einem Gewichtungsfaktor multipliziert wird. Somit ist die Anzahl an Gewichtungsfaktoren gleich der Anzahl an Wirkungsoperanden. Dies geschieht für jeden Betriebsmodus separat. Die Summe der gewichteten Wirkungsoperanden wird dann für jeden Betriebsmodus gleichgesetzt mit dem für den entsprechenden Betriebsmodus erfassten Messwert zur Betriebsbeanspruchung. Bei n Betriebsmodi werden so n Gleichungen erhalten.

Wird die für jeden Betriebsmodus jeweils unmittelbar erfasste Betriebsbeanspruchung mit z bezeichnet, lässt sich das Gleichungssystem wie folgt darstellen:

$$a_1 * W_{11} + a_2 * W_{12} + ... + a_n * W_{1m} = z_1$$

$$a_1 * W_{21} + a_2 * W_{22} + ... + a_n * W_{2m} = z_2$$

$$...$$

$$a_1 * W_{n1} + a_2 * W_{n2} + ... + a_n * W_{nm} = z_n$$

Anschließend wird das Gleichungssystem gelöst und die Werte für die Gewichtungsfaktoren $a_1$ bis $a_m$ erhalten. Beim Lösen des Gleichungssystems kann es durchaus vorkommen, dass ein Gewichtungsfaktor null wird. Üblicherweise nehmen die Gewichtungsfaktoren $a_1$ bis $a_m$ Werte aus der Menge der reellen Zahlen an, beispielsweise der positiven rationalen Zahlen.

Gelöst wird das Gleichungssystem aus Verfahrensschritt d weitergebildet mittels Äquivalenzumformungen. Diese sind als weithin bekannt anzusehen.

Sowohl die Berechnungsvorschrift zum Ermitteln der Betriebsbeanspruchung, als auch die Berechnungsvorschrift für die Wirkungsoperanden sowie die ermittelten Werte für die Gewichtungsfaktoren werden in einem Speicher gespeichert, um sie für eine spätere Auswertung während der Betriebsphase bereitzustellen.

Gemäß einer weiteren Weiterbildung der Erfindung folgen dem Verfahrensschritt e folgende Verfahrensschritte:

f. Erfassen von Messwerten zu den vorgegebenen Messgrößen während des Betriebs des Bauteils, welche Messgrößen ungleich der zu ermittelnden Betriebsbeanspruchung des Bauteils sind;
g. Ermitteln der Wirkungsoperanden $W_1$ bis $W_m$ in vorgegebener Abhängigkeit von den Messwerten;
h. Ermitteln der Betriebsbeanspruchung des Bauteils während des Betriebs des Bauteils mittels der bereitgestellten Berechnungsvorschrift mit den erhaltenen Gewichtungsfaktoren.

Der Verfahrensschritt f wird während der Betriebsphase ausgeführt, welche der Justierphase nachfolgt. Die vorgegebenen Messgrößen aus den Verfahrensschritten a und f sind identisch.

Die Justierphase kann mit einem oder mehreren identischen Bauteilen durchgeführt werden, während in der Betriebsphase weitere, zu den Bauteilen der Justierphase identische Bauteilen eingesetzt werden. Die ermittelte Berechnungsvorschrift inklusive den Gewichtungsfaktoren gilt also nicht nur für ein individuelles Bauteil, sondern für alle Bauteile einer Gruppe aus identischen Bauteilen. Somit kann vor dem Verfahrensschritt f das Bauteil ausgetauscht werden mit einem Bauteil aus einer gemeinsamen Gruppe gleicher Bauteile. In dem oben genannten Beispiel werden in der Justierphase die Verfahrensschritte a bis e beispielsweise mit einem ersten Bremsbelag durchgeführt. Anschließend wird der erste Bremsbelag durch einen vom ersten Bremsbelag verschiedenen, jedoch aus einer gemeinsamen Gruppe identisch ausgebildeter Bremsbeläge entnommenen, zweiten Bremsbelag ausgetauscht, mit welchem die Verfahrensschritte f bis h ausgeführt werden.

Weiterbildungsgemäß kann die in Verfahrensschritt h während des Betriebs des Bauteils ermittelte Betriebsbeanspruchung des Bauteils ausgegeben werden. Beispielsweise kann sie einem Fahrzeugführer angezeigt werden oder sie wird an eine zentrale Leitstelle übermittelt und dort zur weiteren Verarbeitung und Auswertung angezeigt. Die Ausgabe der ermittelten Betriebsbeanspruchung kann auch in Abhängigkeit der ermittelten Betriebsbeanspruchung erfolgen. Überschreitet sie einen vorgegebenen Schwellwert, wird sie angezeigt und/oder gegebenenfalls ein Alarmsignal ausgegeben. Unterhalb des Schwellwerts erfolgt keine Ausgabe der ermittelten Betriebsbeanspruchung und/oder gegebenenfalls eines Alarmsignals. Die Betriebsbeanspruchung kann während des Betriebs des Bauteils während der Betriebsphase kontinuierlich oder in vorgegebenen Zeitabständen diskret ermittelt werden. Eine Ermittlung kann auch in Abhängigkeit von vorgegebenen Ereignissen erfolgen, beispielsweise nach Notbremsungen aus hohen Geschwindigkeiten.

Gemäß einer Ausführungsform der Erfindung können im Verfahrensschritt a Messwerte zu k vorgegebenen Messgrößen während des Betriebs des Bauteils erfasst werden, wobei k eine natürliche Zahl größer oder gleich groß m ist und somit gilt: $k \geq m$. Alternativ könnte auch eine größere Anzahl an Wirkungsoperanden aus einer geringen Anzahl an Messgrößen gebildet werden. Dann würde gelten $k \leq m$.

Ein erfindungsgemäßes Schienenfahrzeug zur Ausführung des erfindungsgemäßen Verfahrens umfasst wenigstens einen Messaufnehmer zur Erfassung der Messwerte zu den vorgegebenen Messgrößen, wenigstens einen Speicher zur Aufnahme und Ausgabe der Gewichtungsfaktoren und mindestens eine Auswerteeinheit, insbesondere einen Mikrocontroller, zum Ermitteln der Betriebsbeanspruchung des Bauteils während des Betriebs des Bauteils mittels der bereitgestellten Berechnungsvorschrift. Der wenigstens eine Messaufnehmer ist geeignet zur Erfassung von Messwerten zu den vorgegebenen Messgrößen und entsprechend ausgebildet.

Des Weiteren sieht die Erfindung ein Computerprogrammprodukt zur Ausführung des erfindungsgemäßen Verfahrens vor. Das Computerprogrammprodukt umfasst einen Software-Code, welcher geeignet ausgebildet ist, das erfindungsgemäße Verfahren auszuführen, wenn es auf einer geeigneten Datenverarbeitungsanlage, welche insbesondere vom erfindungsgemäßen Schienenfahrzeug umfasst wird, ausgeführt wird. Darüber hinaus wird die der Erfindung zugrundeliegende Aufgabe durch einen computerlesbaren Datenträger gelöst, auf welchem das erfindungsgemäße Computerprogrammprodukt hinterlegt ist. Der computerlesbare Datenträger kann dabei ebenfalls vom Schienenfahrzeug umfasst werden, insbesondere wird er vom Speicher zur Aufnahme und Ausgabe der Gewichtungsfaktoren des Fahrzeugs umfasst.

Die Erfindung lässt zahlreiche Ausführungsformen zu. Sie soll anhand des nachfolgenden Beispiels näher erläutert werden, soll jedoch nicht darauf beschränkt gelten.

Ein Hersteller von Schienenfahrzeugen stellt ein erstes von baugleichen Schienenfahrzeugen einer Flotte her. Es umfasst eine druckluftbetriebene Bremsanlage. Nach seiner Fertigstellung wird es auf einer Teststrecke verschiedenen Testfahrten unterzogen.

Dabei wird es in verschiedenen Betriebsmodi betrieben. In einer Justierphase werden zum Ermitteln einer Betriebsbeanspruchung eines Bremsbelags zunächst für jeden Betriebsmodus Messwerte zu vorgegebenen Messgrößen erfasst. Die Messgrößen sind dabei ungleich der zu ermittelnden Betriebsbeanspruchung des Bremsbelags. Als Betriebsbeanspruchung des Bremsbelags wird hier die Abnahme der Dicke des Bremsbelags nach jedem Betreiben des Schienenfahrzeugs in den vorgegebenen Betriebsmodi erfasst. Weitere Beispiele für Betriebsbeanspruchungen können sein: die Abnutzung oder die Rillentiefe einer Bremsscheibe, aber auch die momentane Betriebstemperatur der Bremsscheibe. Als Messgrößen während des Betriebs werden hingegen beispielsweise die momentane Fahrzeuggeschwindigkeit, der Bremsweg oder die Zeit sowie der momentane Druck in einem Bremszylinder vorgegeben.

Zunächst wird das Fahrzeug während der Justierphase also in einem vorgegebenen ersten Betriebsmodus betrieben, während des Betriebs die Messwerte zu den vorgegebenen Einflussfaktoren erfasst und nach dem Betrieb die Betriebsbeanspruchung gemessen. Anschließend wird das Fahrzeug während der Justierphase in einem, weiteren, vom ersten Betriebsmodus unterschiedlichen, vorgegebenen zweiten Betriebsmodus betrieben, während des Betriebs die Messwerte zu den vorgegebenen Einflussfaktoren erfasst und nach dem Betrieb die Betriebsbeanspruchung gemessen.

Nach dem Betreiben des Fahrzeugs in drei unterschiedlichen Betriebsmodi liegen nun drei Messwerte zur Abnahme der Dicke des Bremsbelags vor, sowie mehrere Messwerte zur momentanen Fahrzeuggeschwindigkeit $v$ und zum momentanen Bremszylinderdruck $p$ für jeden Betriebsmodus. Die momentane Fahrzeuggeschwindigkeit $v$ und der momentane Bremszylinderdruck $p$ sind dabei Funktionen des Bremswegs $s$ ($p = p(s)$ und $p = p(s)$) oder der Zeit $t$ ($p = p(t)$ und $p = p(t)$).

Ebenfalls werden in diesem Fall höchstens drei Wirkungsoperanden in vorgegebener Abhängigkeit von den Messwerten zur momentanen Fahrzeuggeschwindigkeit $v$ und zum momentanen Bremszylinderdruck $p$ für jeden der drei Betriebsmodi ermittelt. Hier ergeben sich die Wirkungsoperanden zu:

$$W_1 = \int_0^s p^2 ds \; ; \quad W_S = \int_0^s (v \cdot p) ds \; ; \quad W_3 = \int_0^s p \, ds \; .$$

Nun kann eine Gleichung zur Berechnung der Betriebsbeanspruchung für jeden Betriebsmodus aufgestellt werden. Dazu werden die jeweiligen Wirkungsoperanden $W_1$ bis $W_3$ mit Gewichtungsfaktoren $a_1$ bis $a_3$ für jeden der drei Betriebsmodi derart gewichtet, dass die für jeden Betriebsmodus jeweils unmittelbar erfasste Abnahme der Dicke des Bremsbelags gleich ist einer Summe aus den gewichteten Wirkungsoperanden. Die Abnahme der Dicke des Bremsbelags wird nachfolgend mit $z$ bezeichnet. Allgemein soll also für jeden Betriebsmodus gelten:

$$z = a_1 {}^*W_1 + a_2 {}^*W_2 + a_2 {}^*W_2 .$$

Wie oben bereits ausgeführt ergibt sich bei n Betriebsmodi entsprechend ein Gleichungssystem allgemein:

$$a_1 {}^*W_{11} + a_2 {}^*W_{12} + ... + a_n {}^*W_{1m} = z_1$$

$$a_1 * W_{21} + a_2 * W_{22} + \ldots + a_n * W_{2m} \; = \; z_2$$

$$\ldots$$

$$a_1 * W_{n1} + a_2 * W_{n2} + \ldots + a_n * W_{nm} \; = \; z_n$$

und im vorliegenden Fall:

$$z_1 \; = \; a_1 \cdot \int_0^{s_1} p_1{}^2 ds_1 + a_2 \cdot \int_0^{s_1} (v_1 \cdot p_1) ds_1 + a_3 \cdot \int_0^{s_1} p_1 ds_1$$

$$z_2 \; = \; a_1 \cdot \int_0^{s_2} p_2{}^2 ds_2 + a_2 \cdot \int_0^{s_2} (v_2 \cdot p_2) ds_2 + a_3 \cdot \int_0^{s_2} p_2 ds_2$$

$$z_3 \; = \; a_1 \cdot \int_0^{s_3} p_3{}^2 ds_3 + a_2 \cdot \int_0^{s_3} (v_3 \cdot p_3) ds_3 + a_3 \cdot \int_0^{s_3} p_3 ds \; .$$

Bei den Indizes berücksichtigt wurden hier auch die drei unterschiedlichen Betriebsmodi. Der erste Betriebsmodus sah hier eine Bremsung mit einem vorgegebenen kleinen Ruck und einer vorgegebenen mittleren Bremsbeschleunigung aus einer mittleren vorgegeben Geschwindigkeit bis zum Stillstand vor. Die Bremsung benötigte den Bremsweg $s_1$. Sie führte zu einer Abnahme der Dicke der Bremsscheibe von $z_1$. Der zweite Betriebsmodus sah hier eine Bremsung mit einem vorgegebenen großen Ruck und einer vorgegebenen großen Bremsbeschleunigung aus einer hohen vorgegeben Geschwindigkeit bis zum Stillstand vor. Die Bremsung benötigte den Bremsweg $s_2$ und führte zu einer Abnahme der Dicke der Bremsscheibe von $z_2$. Der dritte Betriebsmodus sah hier hingegen eine Bremsung mit einem vorgegebenen großen Ruck und einer vorgegebenen großen Bremsbeschleunigung aus einer niedrigen vorgegeben Geschwindigkeit bis zum Stillstand vor, welche einen Bremsweg $s_3$ benötigte und zu einer Abnahme der Dicke der Bremsscheibe von $z_3$ führte. Die momentane Geschwindigkeit bei der Bremsung des ersten Betriebsmodus wurde mit $v_1$ bezeichnet. Der momentane Druck im Bremszylinder wurde bei der Bremsung des ersten Betriebsmodus wurde mit $p_1$ bezeichnet. Analog werden die momentanen Geschwindigkeiten sowie die momentanen Bremsdrücke bei den Bremsungen des zweiten und dritten Betriebsmodus mit $v_2$ respektive $v_3$ und $p_2$ respektive $p_3$ bezeichnet.

Ein Betriebsmodus kann jedoch auch mehrere identische Bremsungen umfassen. Das Fahrzeug wird dann mehrfach auf die vorgegebene Geschwindigkeit beschleunigt und auf vorgegebene Art und Weise abgebremst. Erst danach wird die Betriebsbeanspruchung, hier also die Abnahme der Dicke des Bremsbelags, gemessen. Vorteil ist eine höhere Aussagekraft. Wäre x die Anzahl der nacheinander durchgeführten Bremsungen pro Betriebsmodus, wobei x eine natürliche Zahl größer eins ist, würden - ohne weitere Anpassung der Indizes - die Gleichungen des Gleichungssystems folgendermaßen aussehen:

$$z_n \; = \; a_n \cdot \sum_{i=1}^{x} \int_0^{s_n} p_n{}^2 ds_n + a_n \cdot \sum_{i=1}^{x} \int_0^{s_n} (v_n \cdot p_n) ds_n + a_n \cdot \sum_{i=1}^{x} \int_0^{s_n} p_n ds_n \; .$$

Zum Ermitteln der Gewichtungsfaktoren wird nun das oben aufgestellte Gleichungssystem gelöst, so dass Werte für die Gewichtungsfaktoren $a_1$ bis $a_3$ erhalten werden.

Anschließend werden die Werte für die Gewichtungsfaktoren sowie die genannten Berechnungsvorschriften in einem computerlesbaren Datenträger jedes Schienenfahrzeugs der Flotte an baugleichen Schienenfahrzeugen des Herstellers hinterlegt. Nach der Auslieferung der Schienenfahrzeuge an den Kunden werden diese in Betrieb gestellt. Die Betriebsphase eines Schienenfahrzeugs umfasst die nun nachfolgenden Fahrten im Regelbetrieb des Kunden inklusive dem bestimmungsgemäßen Betrieb der Bremsen.

Die Schienenfahrzeuge sind jeweils mit voneinander verschiedenen, jedoch baugleichen Bremsen ausgerüstet. Dennoch lässt sich mit den hinterlegten Daten und mit den während des Betriebs in der Betriebsphase erfassten Messwerten zu den vorgegebenen Messgrößen die Betriebsbeanspruchung ermitteln. Auch ein Austausch der Bremsbeläge mit baugleichen Bremsbelägen ist unerheblich.

In der der Justierphase nachfolgenden Betriebsphase eines der Fahrzeuge werden zunächst Messwerte zu den vorgegebenen Messgrößen während des Betriebs des Bauteils, welche Messgrößen ungleich der zu ermittelnden Betriebsbeanspruchung des Bauteils sind, erfasst. Anschließend werden die Wirkungsoperanden $W_1$ bis $W_m$ in vorgegebener Abhängigkeit von den Messwerten und die Betriebsbeanspruchung des Bauteils während des Betriebs des Bauteils mittels der bereitgestellten Berechnungsvorschrift mit den erhaltenen Gewichtungsfaktoren ermittelt. Dazu werden die Berechnungsvorschriften und die Gewichtungsfaktoren aus dem Speicher bzw. dem computerlesbaren Datenträger zur weiteren Verarbeitung ausgelesen und in der Auswerteeinheit verarbeitet.

Vorteile der Erfindung sind insbesondere, dass sich durch das erfindungsgemäße Verfahren die Betriebsbeanspruchung des Bauteils während des Betriebs des Bauteils in einer Betriebsphase mittelbar abschätzen lässt, ohne sie unmittelbar zu erfassen, gerade wenn eine Messung der Betriebsbeanspruchung im Betrieb nicht möglich ist, die Betriebsbeanspruchung also nicht unmittelbar erfassbar ist. Messungen der Abnutzungs- oder Einflussfaktoren als vorgegebene Messgrößen während des Betriebs des Bauteils reichen dazu aus. Ein Modell der Betriebsbeanspruchung liegt dem zugrunde. Während des Betriebs des Bauteils in der Betriebsphase ist das erfindungsgemäße Verfahren also frei von einer unmittelbaren Erfassung der Betriebsbeanspruchung. Das Modell bildet den Einfluss einzelner Wirkungsoperanden auf die Betriebsbeanspruchung in verschiedenen Betriebsmodi ab. Zur Parameterbestimmung sind lediglich mindestens zwei unterschiedliche Betriebsmodi in einer Justierphase zu durchfahren und die Messwerte zu den vorgegebenen Messgrößen auszuzeichnen und entsprechend dem Modell auszuwerten. Das Modell wird mathematisch durch die vorgegebene Berechnungsvorschrift beschrieben. Ermöglicht wird dies durch die Trennung der Justierphase von der Betriebsphase. In der Justierphase wird das Modell erstellt und hinterlegt, in der Betriebsphase wird dieses Modell dann herangezogen.

Ein Signal, beispielsweise ein Alarm, kann bei Überschreiten eines vorgegebenen Grenzwerts für die Betriebsbeanspruchung ausgegeben werden und der Fahrzeugführer somit rechtzeitig vor einem eventuellen Versagen des Bauteils gewarnt werden. Anstelle der Ausgabe eines Signals kann die ermittelte Betriebsbeanspruchung auch weiterverarbeitet werden, beispielsweise zur Planung von Inspektionen oder gar zur Anpassung der Inspektionsintervalle. Darüber hinaus ist eine Abschätzung der noch zu erwartenden Lebensdauer des Bauteils möglich und eine quasi kontinuierliche Beanspruchungskontrolle zur Laufzeit des Bauteils.

Durch die empirische Ermittlung der Gewichtungsfaktoren der Berechnungsvorschrift kann auch der Einfluss von Umweltbedingungen, beispielsweise Klima, berücksichtigt werden. Da das Bauteil bei unterschiedlichen Umweltbedingungen bestimmungsgemäß betreibbar ist, können auch Messwerte zu äußeren Bedingungen, wie z.B. zur Lufttemperatur oder Luftfeuchtigkeit der Umgebung des Bauteils, erfasst werden und die Wirkungsoperanden können entsprechend auch in Abhängigkeit von den erfassten Messwerten zu den Umweltbedingungen ermittelt werden.

Die ermittelte Berechnungsvorschrift hat Gültigkeit für Bauteile aus einer Gruppe von baugleichen Bauteilen in baugleichen Fahrzeugen und kann auf gattungsgemäße Fahrzeuge ausgeweitet werden. Es ist somit nur eine Justierphase nötig. Dies ist vor allem vorteilhaft bei Betriebsbeanspruchungen, die nur sehr aufwendig zu erfassen sind. Auch das Betreiben des Bauteils in unterschiedlichen Betriebsmodi während der Justierphase selbst muss nicht mit demselben Bauteil durchgeführt werden, sondern lediglich mit einem Bauteil aus einer Gruppe baugleicher Bauteile, aus welcher dann auch das Bauteil aus der Betriebsphase stammt.

Mit dem erfindungsgemäßen Verfahren lassen sich auch optimale Betriebsmodi für das Bauteil ermitteln. Dazu umfasst das Verfahren einen entsprechenden, dem Verfahrensschritt e nachfolgenden Verfahrensschritt.

Auch die unterschiedliche Betriebsbeanspruchung von Bauteilen unterschiedlicher Hersteller lässt sich so leicht ermitteln.

Dadurch, dass sich die Betriebsmodi auch nur marginal unterscheiden können, beispielsweise in Wegstrecke, Zeitdauer oder Umweltbedingungen, müssen während der Justierphase keine besonderen Betriebsbedingungen simuliert, insbesondere spezielle Fahrprogramme durchgeführt werden. Es ist ausreichend, die entsprechenden Messwerte bei üblichen Instandsetzungsfahrten zu überwachen.

**Patentansprüche**

1. Verfahren zum Ermitteln einer Betriebsbeanspruchung eines Bauteils während des Betriebs des Bauteils, **gekennzeichnet durch** folgende Verfahrensschritte:

   a. Erfassen von Messwerten zu vorgegebenen Messgrößen während des Betriebs des Bauteils in einer Justierphase für wenigstens n mit $n \geq 2$ voneinander verschiedenen, vorgegebenen Betriebsmodi, welche Messgrößen ungleich der zu ermittelnden Betriebsbeanspruchung des Bauteils sind;
   b. Ermitteln von m Wirkungsoperanden $W_1$ bis $W_m$ mit $m \geq 2$ und $m \leq n$ in vorgegebener Abhängigkeit von den Messwerten für jeden der n Betriebsmodi;

c. Erfassen eines Messwerts der Betriebsbeanspruchung nach dem Betrieb des Bauteils für jeden der n Betriebsmodi;

d. Aufstellen und Lösen eines Gleichungssystems mit n Gleichungen derart, dass m Gewichtungsfaktoren $a_1$ bis $a_m$ erhalten werden, mit welchen die m Wirkungsoperanden $W_1$ bis $W_m$ gewichtet werden, wobei eine Summe aus den gewichteten Wirkungsoperanden für jeden Betriebsmodus gleich ist der für den entsprechenden Betriebsmodus erfassten Messwerts der Betriebsbeanspruchung;

e. Bereitstellen einer Berechnungsvorschrift zum Ermitteln der Betriebsbeanspruchung während des Betriebs des Bauteils in einer Betriebsphase mit den erhaltenen Gewichtungsfaktoren.

2. Verfahren nach Anspruch 1, **gekennzeichnet durch** folgende Verfahrensschritte, welche dem Verfahrensschritt e nachfolgen:

f. Erfassen von Messwerten zu den vorgegebenen Messgrößen während des Betriebs in der Betriebsphase des Bauteils, welche Messgrößen ungleich der zu ermittelnden Betriebsbeanspruchung des Bauteils sind;

g. Ermitteln der Wirkungsoperanden $W_1$ bis $W_m$ in vorgegebener Abhängigkeit von den Messwerten;

h. Ermitteln der Betriebsbeanspruchung des Bauteils während des Betriebs des Bauteils mittels der bereitgestellten Berechnungsvorschrift mit den erhaltenen Gewichtungsfaktoren.

3. Verfahren nach Anspruch 2, **dadurch gekennzeichnet, dass** vor Verfahrensschritt f das Bauteil ausgetauscht wird mit einem Bauteil aus einer gemeinsamen Gruppe gleicher Bauteile.

4. Verfahren nach einem der Ansprüche 1 bis 3, **dadurch gekennzeichnet, dass** das Gleichungssystem aus Verfahrensschritt d gelöst wird mittels Äquivalenzumformungen.

5. Verfahren nach einem der Ansprüche 2 bis 4, **dadurch gekennzeichnet, dass** die in Verfahrensschritt h während des Betriebs des Bauteils ermittelte Betriebsbeanspruchung des Bauteils ausgegeben wird.

6. Verfahren nach einem der Ansprüche 1 bis 5, **dadurch gekennzeichnet, dass** es sich bei dem Bauteil um einen Bremsbelag eines Schienenfahrzeugs handelt.

7. Verfahren nach Anspruch 6, **dadurch gekennzeichnet, dass** die vorgegebenen Messgrößen die Zeit und/oder der Bremsweg und der Druck in einem Bremszylinder einer Druckluftbremse des Schienenfahrzeugs sind.

8. Verfahren nach Anspruch 7, **dadurch gekennzeichnet, dass** drei Wirkungsoperanden ermittelt werden, wobei sich ein erster Wirkungsoperand ergibt aus einem Integral des Quadrats des Drucks im Bremszylinder einer Druckluftbremse des Schienenfahrzeugs über den Bremsweg des Schienenfahrzeugs und wobei sich ein zweiter Wirkungsoperand ergibt aus einem Integral einer Multiplikation der Geschwindigkeit des Schienenfahrzeugs und des Drucks im Bremszylinder einer Druckluftbremse des Schienenfahrzeugs über den Bremsweg des Schienenfahrzeugs und wobei sich ein dritter Wirkungsoperand ergibt aus einem Integral des Drucks im Bremszylinder einer Druckluftbremse des Schienenfahrzeugs über den Bremsweg des Schienenfahrzeugs.

9. Verfahren nach einem der Ansprüche 1 bis 8, **dadurch gekennzeichnet, dass** die Wirkungsoperanden mittels mathematischen Operationen ausschließlich mit den erfassten Messwerten zu den vorgegebenen Messgrößen und vorgegebenen Konstanten als Operanden ermittelt werden.

10. Schienenfahrzeug mit wenigstens einem computerlesbaren Datenträger umfassend ein Computerprogrammprodukt welches, beim Lesen durch einem Computer, diesem zur Ausführung des Verfahrens nach einem der Ansprüche 1 bis 9 führt.

**Claims**

1. Method for determining an operating stress of a component during operation of the component, **characterized by** the following process steps:

a. Recording measured values for predefined measurement variables during operation of the component in an adjustment phase for at least n different predefined operating modes, where $n \geq 2$, which measurement variables are not equal to the operating stress of the component to be determined;

b. Determining m effect operands $W_1$ to $W_m$ where $m \geq 2$ and $m \leq n$ in predefined dependence on the measured values for each of the n operating modes;

c. Recording a measured value of the operating stress after operation of the component for each of the n operating modes;

d. Setting up and solving a system of equations with n equations, in such a manner that m weighting factors $a_1$ to $a_m$ are obtained, with which the m effect operands $W_1$ to $W_m$ are weighted, wherein a sum of the weighted effect operands for each operating mode is equal to the measured value of the operating stress recorded for the corresponding operating mode;

e. Providing a calculation rule for determining the operating stress during operation of the component in an operating phase using the weighting factors obtained.

2. Method according to Claim 1, **characterized by** the following process steps which follow process step e:

f. Recording measured values for the predefined measurement variables during operation of the component in the operating phase, which measurement variables are not equal to the operating stress of the component to be determined;

g. Determining the effect operands $W_1$ to $W_m$ in predefined dependence on the measured values;

h. Determining the operating stress of the component during operation of the component by means of the provided calculation rule with the weighting factors obtained.

3. Method according to Claim 2, **characterized in that** before process step f, the component is exchanged with a component from a common group of identical components.

4. Method according to any one of Claims 1 to 3, **characterized in that** the system of equations from process step d is solved by means of equivalence transformations.

5. Method according to any one of Claims 2 to 4, **characterized in that** the operating stress of the component determined in process step h during operation of the component is output.

6. Method according to any one of Claims 1 to 5, **characterized in that** the component comprises a brake lining of a rail vehicle.

7. Method according to Claim 6, **characterized in that** the predefined measurement variables are the time and/or the braking distance and the pressure in a brake cylinder of a compressed air brake of the rail vehicle.

8. Method according to claim 7, **characterized in that** three effect operands are determined, wherein a first effect operand is obtained from an integral of the square of the pressure in the brake cylinder of a compressed air brake of the rail vehicle over the braking distance of the rail vehicle and wherein a second effect operand is obtained from an integral of a multiplication of the speed of the rail vehicle and the pressure in the brake cylinder of a compressed air brake of the rail vehicle over the braking distance of the rail vehicle and wherein a third effect operand is obtained from an integral of the pressure in the brake cylinder of a compressed air brake of the rail vehicle over the braking distance of the rail vehicle.

9. Method according to any one of Claims 1 to 8, **characterized in that** the effect operands are determined by means of mathematical operations exclusively using the recorded measured values for the predefined measurement variables and predefined constants as operands.

10. Rail vehicle having at least one computer-readable data carrier comprising a computer program product, which, when read by a computer, causes said rail vehicle to execute the method according to any one of Claims 1 to 9.

**Revendications**

1. Procédé de détermination d'une contrainte de fonctionnement d'une pièce pendant le fonctionnement de la pièce, **caractérisé par** les stades de procédé suivants :

a. détection de valeurs de mesure de grandeurs de mesure données à l'avance pendant le fonctionnement de la pièce dans une phase de réglage pour au moins n avec $n \geq 2$ modes de fonctionnement donnés à l'avance différents les uns des autres, les grandeurs de mesure étant différentes de la contrainte de fonctionnement à déterminer de la pièce ;

b. détermination de m opérandes $W_1$ à $W_m$ d'action avec $m \geq 2$ et $m \geq n$ dans une dépendance donnée à l'avance des valeurs de mesure pour chacun des n modes de fonctionnement ;

c. détection d'une valeur de mesure de la contrainte de fonctionnement après le fonctionnement de la pièce pour chacun des n modes de fonctionnement ;

d. établissement et résolution d'un système d'équation à n équations, de manière à obtenir m facteurs $a_1$ à $a_m$ de pondération, par lesquels les m opérandes $W_1$ à $W_m$ d'action sont pondérées, une somme des opérandes d'action pondérées pour chaque mode de fonctionnement étant égale à la valeur de mesure, détectée pour le mode de fonctionnement correspondant, de la contrainte de fonctionnement ;

e. mise à disposition d'une prescription de calcul pour déterminer la contrainte de fonctionnement pendant le fonctionnement de la pièce dans une phase de fonctionnement par les facteurs de pondération.

2. Procédé suivant la revendication 1, **caractérisé par** les stades de procédé, qui suivent le stade e de procédé :

f. détection de valeurs de mesure des grandeurs de mesure données à l'avance pendant le fonctionnement dans la phase de fonctionnement de la pièce, lesquelles grandeurs de mesure sont différentes de la contrainte de fonctionnement à déterminer de la pièce ;

g. détermination des opérandes $W_1$ à $W_m$ d'action en dépendance donnée à l'avance des valeurs de mesure ;

h. détermination de la contrainte de fonctionnement de la pièce pendant le fonctionnement de la pièce au moyen de la prescription de calcul mise à disposition par les facteurs de pondération obtenus.

3. Procédé suivant la revendication 2, **caractérisé en ce que**, avant le stade f de procédé, on remplace la pièce par une pièce d'un groupe commun de pièces pareilles.

4. Procédé suivant l'une des revendications 1 à 3, **caractérisé en ce que** l'on résout le système d'équations du stade d de procédé au moyen de transformations d'équivalence.

5. Procédé suivant l'une des revendications 2 à 4, **caractérisé en ce que** l'on sort la contrainte de fonctionnement de la pièce, déterminée dans le stade h de procédé pendant le fonctionnement de la pièce.

6. Procédé suivant l'une des revendications 1 à 5, **caractérisé en ce que** la pièce est une garniture de frein d'un véhicule ferroviaire.

7. Procédé suivant la revendication 6, **caractérisé en ce que** les grandeurs de mesure données à l'avance sont le temps et/ou la longueur de freinage et la pression dans un cylindre de frein d'un frein à air comprimé du véhicule ferroviaire.

8. Procédé suivant la revendication 7, **caractérisé en ce que** l'on détermine trois opérandes d'action, une première opérande d'action provenant d'une intégrale du carré de la pression dans le cylindre de frein d'un frein à air comprimé du véhicule ferroviaire sur la longueur de freinage du véhicule ferroviaire, une deuxième opérande d'action provenant d'une intégrale d'une multiplication de la vitesse du véhicule ferroviaire par la pression dans le cylindre de frein d'un frein à air comprimé du véhicule ferroviaire sur la longueur de freinage du véhicule ferroviaire et une troisième opérande d'action provenant d'une intégrale de la pression dans le cylindre de frein d'un frein à air comprimé du véhicule ferroviaire sur la longueur de freinage du véhicule ferroviaire.

9. Procédé suivant l'une des revendications 1 à 8, **caractérisé en ce que** l'on détermine, comme opérande, les opérandes d'action au moyen d'opérations mathématiques, exclusivement par les valeurs de mesure détectées des grandeurs de mesure données à l'avance et des constantes données à l'avance.

10. Véhicule ferroviaire ayant au moins un support de données déchiffrable par ordinateur, comprenant un produit de programme informatique, qui, lorsqu'il est déchiffré par un ordinateur, fait que celui-ci exécute le procédé suivant l'une des revendications 1 à 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030056995 A1